# EUROPÄISCHE PATENTSCHRIFT

(11) **EP 4 484 997 B1**
(45) Veröffentlichungstag und Bekanntmachung des Hinweises auf die Patenterteilung: **02.09.2026**
(21) Anmeldenummer: 24161635.8
(22) Anmeldetag: 06.03.2024
(51) Int. Cl.: G01S 7/02, F16M 11/12, G01D 11/30, G01S 7/481, G03B 17/56, H04N 23/51

(54) **SENSORANORDNUNG**
SENSOR ASSEMBLY
AGENCEMENT DE CAPTEURS

(30) Priorität: 30.06.2023 DE 202023103660 U
(43) Veröffentlichungstag der Anmeldung: 01.01.2025
(73) Patentinhaber: Leuze electronic GmbH + Co KG, 73277 Owen/Teck (DE)
(72) Erfinder: Kazmaier, Johannes, 72664 Kohlberg (DE); Brunner, Rolf, 82223 Eichenau (DE)
(74) Vertreter: Ruckh, Rainer Gerhard

(56) Entgegenhaltungen:
- EP-A1- 3 171 070
- CN-A- 103 116 156
- CN-U- 212 158 492
- CN-U- 214 930 710
- US-A1- 2020 114 851
- ANONYMOUS: "nanoScan3 mounting kits", 10 June 2022 (2022-06-10), pages 1 - 8, XP093189184, Retrieved from the Internet <URL:https://cdn.sick.com/media/docs/8/78/878/mounting_instructions_nanoscan3_mounting_kits_de_en_im0089878.pdf> [retrieved on 20240724]
- MURGA GAIZKA ET AL: "Design solutions for dome and main structure (mount) of giant telescopes", PROCEEDINGS OF SPIE; [PROCEEDINGS OF SPIE ISSN 0277-786X VOLUME 10524], SPIE, US, vol. 9906, 27 July 2016 (2016-07-27), pages 99060C - 99060C, XP060074224, ISBN: 978-1-5106-1533-5, DOI: 10.1117/12.2233502

## Beschreibung

Die Erfindung betrifft eine Sensoranordnung.

Eine derartige Sensoranordnung weist generell einen Sensor auf, der zur Erfassung bzw. Erkennung von Objekten eingesetzt wird. Insbesondere erfolgt mit dem Sensor eine Erfassung von Objekten in einem Überwachungsbereich. Abhängig davon, ob mit dem Sensor ein Objekt im Überwachungsbereich erfasst wird oder nicht, generiert der Sensor ein Objektfeststellungssignal, das beispielsweise an eine Steuerung einer Anlage ausgegeben wird.

Der Sensor weist ein definiertes Sichtfeld auf, innerhalb dessen der Sensor Strahlung in den Überwachungsbereich sendet, bzw. Strahlung aus diesem empfängt, beispielsweise durch Reflexionen an zu detektierenden Objekten. Das Sichtfeld befindet sich an der Frontseite des Sensors.

In bekannter Weise wird der Sensor mittels eines Montagesystems an einer Unterlage wie z.B. einer Wand oder an einer zu überwachenden Anlage montiert. Das Montagesystem ermöglicht eine Ausrichtung des Sensors, insbesondere eine Ausrichtung der Orientierung des Sichtfelds. Sobald die Ausrichtung beendet ist, wird der Sensor in der einjustierten Position mittels des Montagesystems lagefixiert.

Um eine Ausrichtung des Sensors in einem möglichst großen Einstellbereich zu ermöglichen, wird der Sensor typisch nur an einer Seite, insbesondere seiner Rückseite mit dem Montagesystem verbunden.

Der restliche Teil des Sensors ist frei zugänglich. Dies birgt die Gefahr von Beschädigungen des Sensors, beispielsweise durch Werkstücke, Fahrzeuge oder dergleichen, die gegen den Sensor stoßen.

Prinzipiell kann um den Sensor als mechanischer Schutz eine stationäre Abdeckung gebaut werden, wobei die Abdeckung vorzugsweise alle Seiten des Sensors mit Ausnahme der Frontseite, wo das Sichtfeld des Sensors liegt, umgibt. Nachteilig hierbei ist jedoch, dass durch eine derartige Abdeckung die Orientierung des Sichtfelds des Sensors festgelegt ist und nicht mehr geändert werden kann.

Zudem versperren derartige Abdeckungen oft den Zugang zu Bedienelementen am Sensor, wodurch Einstellungen des Sensors nicht mehr oder nur noch mit hohem Aufwand durchgeführt werden können.

In Anonymous: "nanoScan3 mounting kits",
10. Juni 2022 (2022-06-10), Seiten 1-8, XP093189184, (URL:https://cdn.sick.com/media/docs/8/78/878/mounting_ instructions_nanoscan3_mounting_kits_de_en_im0089878.pdf
ist eine Befestigungsvorrichtung für einen Sicherheits-Laserscanner beschrieben. Die Befestigungsvorrichtung umfasst einen an einer Unterlage fixierten Befestigungswinkel sowie eine plattenförmige Aufnahme, die zur Justage des Sicherheits-Laserscanners relativ zum Befestigungswinkel schwenkbar und mittels Schrauben in einer Sollposition an diesem fixierbar ist.

Die CN 214 930 710 U betrifft eine Drohnenkartierungsdatenerfassungsvorrichtung, die eine Drohne, eine Plattform, eine Pufferplatte, einen Drehrahmen, eine Kamera, eine Pufferhülse und einen Schutzmechanismus umfasst. Die Plattform ist am unteren Ende der Drohne angebracht. Dabei ist die Plattform mit der Pufferplatte durch Bolzen verbunden, und die Pufferhülse ist auf den Bolzen zwischen der Plattform und der Pufferplatte angebracht. Der Drehrahmen ist auf der Pufferplatte angebracht, und die Kamera ist auf dem Drehrahmen angebracht; der Schutzmechanismus ist auf der Pufferplatte angebracht, wobei die Pufferhülse als Puffer zwischen der Plattform und der Pufferplatte verwendet wird. Die Pufferplatte mit der Pufferhülse sowie die Schutzvorrichtung schützen die Kamera, wenn die Drohne zu Boden fällt.

In MURGA GAIZKA ET AL: "Design solutions for dome and main structure (mount) of giants telescopes",
PROCEEDINGS OF SPIE; [PROCEEDINGS OF SPIE ISSN 0277-786X VOLUME 10524], SPIE, US,
Bd. 9906, 27. Juli 2016 (2016-07-27), Seiten 99060C-99060C, XP060074224, DOI:10.1117/12.2233502 ISBN: 978-1-5106-1533-5
ist ein Teleskop mit Positioniervorrichtungen beschrieben, wobei das Teleskop in einer Kuppel gelagert ist.

Die EP 3 171 070 A1 betrifft eine Halterung für einen optoelektronischen Sensor umfassend ein erstes Halterungsteil, das für eine Befestigung an einer ortsfesten Fixierfläche ausgebildet ist, und ein zweites Halterungsteil, das mit einem Gehäuse des optoelektronischen Sensors koppelbar ist, wobei das zweite Halterungsteil relativ zu dem ersten Halterungsteil um eine erste Schwenkachse drehbar ist.

Die CN 103 116 156 A betrifft eine U-förmige Halterung, in deren Wänden jeweils eine konzentrische Anordnung von Langlöchern vorhanden ist, in welche Befestigungsmittel zur Justage und Befestigung eines Sensors einführbar sind.

Die CN 212 158 492 U betrifft einen Rahmen zur Lagerung eines Sensors. Im Rahmen sind mehrere parallel orientierte Platten gelagert, mittels derer der Sensor neigungsverstellbar gelagert ist.

Die US 2020/0114851 A1 betrifft ein Schutzrahmengestell für einen an einem Wandelement befestigten Sensor.

Der Erfindung liegt die Aufgabe zugrunde ein Montagesystem für Sensoren bereitzustellen, welches eine hohe Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Sensoranordnung mit einem ein Sichtfeld aufweisenden Sensor und mit einer primären Halterung, an welcher der Sensor befestigbar ist. Die primäre Halterung bildet eine Justagevorrichtung aus, mittels derer die Orientierung des Sichtfelds des Sensors einstellbar ist. Eine sekundäre Halterung ist vorhanden, an welcher die primäre Halterung befestigbar ist. Die sekundäre Halterung bildet einen mechanischen Schutz für den Sensor aus und ist an die Orientierung des Sichtfelds des Sensors anpassbar. Die sekundäre Halterung ist mehrteilig ausgebildet, wobei mindestens ein Teil der sekundären Halterung an die Orientierung des Sichtfelds des Sensors anpassbar ist. Sie sekundäre Halterung weist ein Befestigungselement auf, das zur Befestigung an einer Unterlage ausgebildet ist. Die sekundäre Halterung weist weiterhin ein an dem Befestigungselement positionsverstellbares Schutzelement auf, wobei das Befestigungselement ein Befestigungswinkel ist. Das Schutzelement ist in Form eines Bügels ausgebildet, wobei das Schutzelement bezüglich einer Drehachse drehbar gelagert und in diskreten Drehpositionen am Befestigungselement arretierbar ist. Die primäre Halterung weist ein mit der sekundären Halterung verbundenes Verbindungselement und einen den Sensor aufnehmenden um eine DrehAchse drehbare Sensorhalter auf, wobei die Lage des Sensorhalters relativ zum Verbindungselement einstellbar ist. Das Verbindungselement besteht aus einem Winkel und einer Platte, die an der sekundären Halterung befestigt ist, wobei der Winkel mit einem ersten Arm um eine Schwenkachse schwenkbar an der Platte gelagert ist. Auf dem zweiten Arm des Winkels ist der Sensorhalter um eine Achse drehbar gelagert. Sensorlagen des Sensors sind an der primären Halterung innerhalb vorgegebener Einstellbereiche veränderbar und Einstellbereiche des Schutzelements sind an die Einstellbereiche des Sensors angepasst.

Die primäre Halterung bildet dabei eine Justagevorrichtung aus, mittels derer eine flexible, einfach Justage eines Sensors ermöglicht wird. Während eines Justagevorgangs kann die Orientierung des Sichtfelds des an der primären Halterung gelagerten Sensors in gewünschter Weise eingestellt werden, indem die primäre Halterung betätigt und entsprechend eingestellt wird. Nach erfolgter Justage wird die primäre Halterung mit dem Sensor in der gewünschten Position lagefixiert.

Erfindungsgemäß ist zusätzlich zur primären Halterung eine sekundäre Halterung vorhanden, mit der ein mechanischer Schutz des Sensors erzielt wird, d.h. die sekundäre Halterung schützt den Sensor gegen mechanische Einflüsse. Insbesondere verhindert die sekundäre Halterung, dass Gegenstände wie Werkstücke, Fahrzeuge und dergleichen nicht direkt gegen den Sensor stoßen können, wodurch Beschädigungen des Sensors vermieden werden. Dabei ist die sekundäre Halterung so ausgebildet, dass diese die Stoßbelastungen auffängt, so dass ein Kontakt den Sensor mit anstoßenden Gegenständen vermieden wird.

Ein wesentlicher Aspekt der Erfindung besteht darin, dass die sekundäre Halterung an die mit der primären Halterung eingestellte Orientierung des Sichtfelds des Sensors angepasst wird. Die sekundäre Halterung wird also an die eingestellte Orientierung des Sichtfelds des Sensors angepasst, so dass die sekundäre Halterung für unterschiedliche Orientierungen des Senors die mechanische Schutzwirkung des Sensors gewährleistet, ohne dass dadurch das Sichtfeld des Sensors beeinträchtigt wird.

Erfindungsgemäß ist die sekundäre Halterung mehrteilig ausgebildet. Mindestens ein Teil der sekundären Halterung ist an die Orientierung des Sichtfelds des Sensors anpassbar.

Dies stellt eine effiziente Konstruktionsform dar, da nicht die gesamte sekundäre Halterung an die aktuelle Orientierung des Sensors angepasst werden muss.

Die sekundäre Halterung weist ein Befestigungselement auf, das zur Befestigung an einer Unterlage ausgebildet ist. Die sekundäre Halterung weist ein an dem Befestigungselement positionsverstellbares Schutzelement auf.

Daran angepasst weist die primäre Halterung ein mit der sekundären Halterung fest verbundenes Verbindungselement und einen den Sensor aufnehmenden Sensorhalter auf, wobei die Lage des Sensorhalters relativ zum Verbindungselement einstellbar ist.

Mit dem Befestigungselement der sekundären Halterung wird das gesamte Montagesystem an einer Unterlage wie einer Wand eines Gebäudes oder einer Anlage befestigt. Mit dem Befestigungselement wird die sekundäre Halterung selbst an der Unterlage befestigt. Durch das Verbindungselement ist die primäre Halterung fest mit dem Befestigungselement der sekundären Halterung und damit auch mit der Unterlage fest verbunden.

Durch eine Einstellung der Lage des Sensorhalters relativ zum Verbindungselement kann die Orientierung des Sichtfelds des Sensors eingestellt werden. Daran angepasst kann das Schutzelement der sekundären Halterung relativ zum Befestigungselement verstellt werden, so dass der Sensor durch das Schutzelement gegen mechanische Einflüsse geschützt ist, jedoch das Schutzelement das Sichtfeld nicht beeinträchtigt. In ihrer Endposition sind der Sensorhalter und das Schutzelement lagefixiert.

Der Sensorhalter ist um eine Achse drehbar. Durch die Drehbarkeit des Sensorhalters ist eine einfache Justage des Sensors möglich.

Erfindungsgemäß ist das Befestigungselement ein Befestigungswinkel.

Daran angepasst ist das Schutzelement in Form eines Bügels ausgebildet.

Der Befestigungswinkel ist mit einem ersten Winkelsegment an der Unterlage befestigt. Auf dem zweiten, vorzugsweise senkrecht zum ersten Winkelsegment orientierten Winkelsegment ist der das Schutzelement bildende Bügel gelagert. Der Bügel ist im Wesentlichen u-förmig ausgebildet und weist zwei über ein Mittelteil verbundene Schenkel auf. Die freien Enden der Schenkel sind auf dem zweiten Winkelsegment befestigt.

Die Schenkel und das Mittelteil erstrecken sich über den Sensorhalter mit dem Sensor und schützen so den Sensor gegen Beschädigungen.

Die Positionsverstellbarkeit des Schutzelements ist vorteilhaft, dadurch realisiert, dass das Schutzelement um eine Drehachse drehbar gelagert ist.

Das Schutzelement ist in diskreten Drehpositionen am Befestigungselement arretierbar.

Hierzu sind vorteilhaft in einem Segment des Befestigungselements zwei konzentrisch zu einem Drehpunkt angeordnete Lochreihen oder konzentrisch angeordnete Langlöcher vorhanden. Zur Arretierung einer Drehposition des Schutzelements ist in jeweils mindestens ein Loch einer Lochreihe oder in mindestens ein Langloch ein mit der Unterseite des Schutzelements verbindbares Fixierelement einführbar.

Die Lochreihen können entlang von Kreisbogensegmenten angeordnet sind. Die Löcher des Lochreihen können als kreisförmige Löcher oder Langlöcher ausgebildet sein. Die Fixierelemente können in Form von Schrauben ausgebildet sein.

Durch die Länge der Lochreihen wird der Einstellbereich vorgegeben, der vorteilhaft ± 60°, besonders vorteilhaft ± 40° beträgt.

Der Einstellbereich ist vorteilhaft an dem Einstellbereich der Drehungen des Sensorhalters der primären Halterung angepasst.

Durch das Überstehen mindestens einer Kante des sekundären Halters wird der Sensor im primären Halter geschützt vor mechanischen Stößen durch vorbeigehende Menschen oder Objekte auf vorbeifahrenden Fahrzeugen auch wenn der sekundäre Halter um eine oder zwei Achsen verdreht montiert ist.

Weiter vorteilhaft verläuft die Achse, um welche der Sensorhalter drehbar ist, parallel zur Drehachse des Schutzelements. Dadurch kann die Drehposition des Schutzelements an die Drehposition des Sensorhalters genau angepasst werden.

Gemäß einer alternativen Ausgestaltung ist der Sensorhalter in zwei Raumrichtungen neigungsverstellbar.

Die Verstellbarkeit des Schutzelements ist auch in diesem Fall so an die Verstellbarkeit des Sensorhalters angepasst, dass das Schutzelement stets den Sensorhalter mit dem Sensor gegen mechanische Beschädigungen schützt.

Gemäß einer vorteilhaften Weiterbildung ist der Sensorhalter mit dem Sensor nicht nur um die Achse drehbar. Zusätzlich ist der Sensor an dem Sensorhalter um eine Schwenkachse und der Sensorhalter um eine Platte um die Achse X schwenkbar gelagert.

Vorteilhaft verläuft die Schwenkachse senkrecht zur Längsachse des Sensorhalters.

Damit kann die Lage des Sensors in zwei oder drei Raumrichtungen verstellt werden.

Daran angepasst ist das Schutzelement mehrteilig ausgebildet. Ein oberes Teil des Schutzelements ist bezüglich einer Schwenkachse gegenüber einem unteren Teil des Schutzelements, das mit dem Befestigungselement verbunden ist, schwenkbar. Zweckmäßig verläuft die Schwenkachse senkrecht zur Drehachse.

Das Schutzelement kann somit exakt an die Position des am Sensorhalter gelagerten Sensors angepasst werden, um diesen gegen mechanische Beschädigungen zu schützen.

Da nur die sekundäre Halterung einen Schutz gegen mechanische Belastungen gewährleisten muss, besteht vorteilhaft besteht die sekundäre Halterung aus einem stabileren Material als die primäre Halterung.

Beispielsweise besteht die primäre Halterung aus einem Kunststoff und die sekundäre Halterung aus einem metallischen Werkstoff.

Natürlich sind auch andere Materialienkombinationen denkbar. So kann z.B. die sekundäre Halterung aus einem härteren, widerstandfähigeren Kunststoff als die primäre Halterung bestehen.

Gemäß einer vorteilhaften Ausführungsform ist der Sensor ein Radarsensor.

Alternativ ist der Sensor ein optischer Sensor.

Insbesondere ist der optische Sensor ein LIDAR-Sensor oder ein Kamerasensor.

Gemäß einer vorteilhaften Ausgestaltung ist der Sensor ein Sicherheitssensor.

Der Sicherheitssensor kann in sicherheitstechnischen Applikationen, insbesondere im Bereich des Personenschutzes, eingesetzt werden und weist hierzu einen fehlersicheren Aufbau auf.

Die Erfindung wird im Folgenden anhand der Zeichnungen erläutert. Es zeigen:
- Figur 1:: Schematische Darstellung der erfindungsgemäßen Sensoranordnung.
- Figur 2:: Erstes Ausführungsbeispiel eines Sensors für die Sensoranordnung gemäß Figur 1.
- Figur 3:: Zweites Ausführungsbeispiel eines Sensors für die Sensoranordnung gemäß Figur 1.
- Figur 4:: Ausführungsbeispiel eines Montagesystems für die Sensoranordnung gemäß Figur 1 in einer Explosionsdarstellung.
- Figur 5:: Montagesystem gemäß Figur 4 in einer ersten Justageposition.
- Figur 6:: Montagesystem gemäß Figur 4 in einer zweiten Justageposition.
- Figur 7:: Zweites Ausführungsbeispiel des Montagesystems.
- Figur 8:: Drittes Ausführungsbeispiel des Montagesystems.

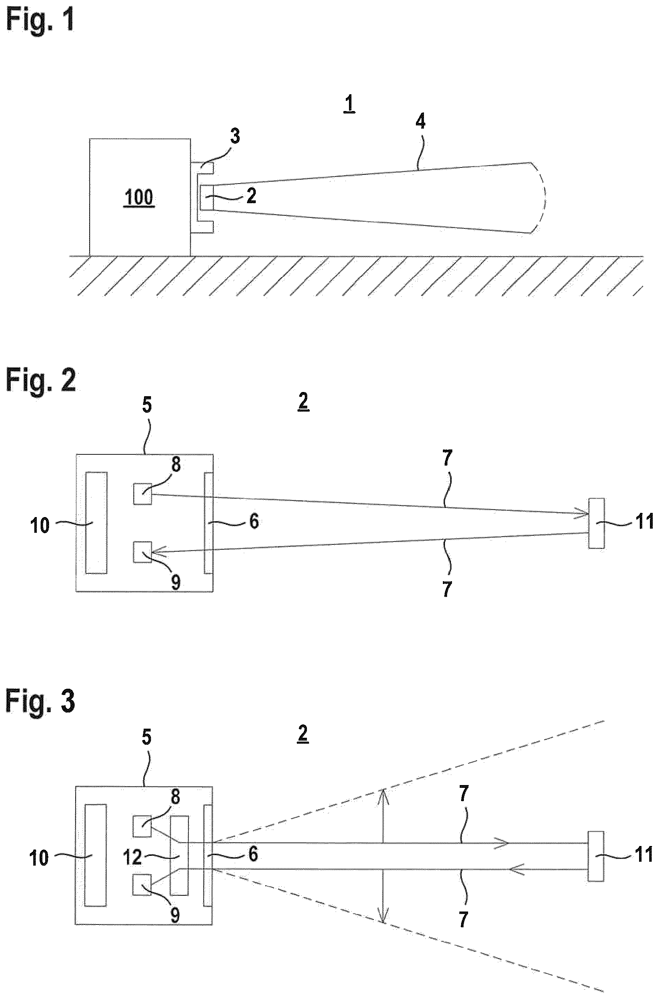

Figur 1 zeigt schematisch ein Ausführungsbeispiel der erfindungsgemäßen Sensoranordnung 1. Die Sensoranordnung 1 weist einen Sensor 2 auf, der mittels eines Montagesystems 3 an einer Anlage 100 montiert ist, so dass mit dem Sensor 2 ein Überwachungsbereich im Vorfeld der Anlage 100 überwacht werden kann. Der Sensor 2 weist ein Sichtfeld 4 auf, innerhalb dessen eine Objekterfassung durchgeführt werden kann.

Der Sensor 2 ist am Montagesystem 3 justierbar gelagert. Zudem bietet das Montagesystem 3 einen mechanischen Schutz gegen Beschädigungen.

Figur 2 zeigt ein erstes Ausführungsbeispiel des Sensors 2 der erfindungsgemäßen Sensoranordnung 1. Der Sensor 2 weist ein Gehäuse 5 auf, in welchem die Sensorkomponenten des Sensors 2 integriert sind. In der Frontwand des Gehäuses 5 befindet sich eine Frontscheibe 6. Der Sensor 2 umfasst eine Strahlung 7 emittierende Sendereinheit 8, eine Strahlung 7 empfangende Empfängereinheit 9 und eine Auswerteeinheit 10 zur Auswertung von Empfangssignalen der Empfängereinheit 9.

Die von der Sendereinheit 8 in einer feststehenden Richtung emittierte Strahlung 7 wird durch eine Frontscheibe 6 in den Überwachungsbereich geführt. Von einem Objekt 11 reflektierte Strahlung 7 wird zurück zur Empfängereinheit 9 geführt. In der Auswerteeinheit 10 wird abhängig von den Empfangssignalen der Empfängereinheit 9 ein Objektfeststellungssignal generiert, das insbesondere angibt, ob ein Objekt 11 im Überwachungsbereich vorhanden ist oder nicht.

Der Öffnungswinkel der Strahlung 7 und/oder der Sichtwinkelbereich der Empfängereinheit 9 bestimmt das Sichtfeld 4 des Sensors 2.

Der Sensor 2 kann als Distanzsensor ausgebildet sein, wobei zur Distanzbestimmung ein Impuls-Laufzeit-Verfahren eingesetzt werden kann.

Der Sensor 2 kann als Radarsensor ausgebildet sein. Dann ist die Sendereinheit 8 von einer Sendeantenne und die Empfängereinheit 9 von einer Empfangsantenne gebildet.

Der Sensor 2 kann auch ein optischer Sensor 2 sein. Die Sendereinheit 8 besteht dann aus wenigstens einem Lichtstrahlen emittierenden Sender, die Empfängereinheit 9 aus wenigstens einem Lichtstrahlen empfangenden Empfänger. Der optische Sensor 2 kann auch als Kamerasensor ausgebildet sein. Dann besteht die Empfängereinheit 9 aus einer matrixförmigen Anordnung von Empfangselementen.

Figur 3 zeigt ein weiteres Ausführungsbeispiel des Sensors 2. Der Sensor 2 gemäß Figur 3 ist gegenüber der Ausführungsform gemäß Figur 2 dahingehend erweitert, dass eine Ablenkeinheit 12 vorhanden ist, mit der die Strahlung 7 periodisch innerhalb eines Erfassungsbereichs geführt ist, welcher das Sichtfeld 4 des Sensors 2 definiert.

Der Sensor 2 kann wieder als Radarsensor oder optischer Sensor 2 ausgebildet sein, wobei der optische Sensor 2 als Empfängereinheit 9 nur einen Empfänger aufweist.

Generell kann der Sensor 2 als Sicherheitssensor ausgebildet sein, der für den Einsatz in sicherheitstechnischen Applikationen ausgebildet ist. Hierzu weist der Sicherheitssensor einen fehlersicheren Aufbau auf. Dies kann durch eine redundante Auswerteeinheit 10, beispielsweise in Form zweier sich zyklisch überwachender Rechnereinheiten, realisiert werden.

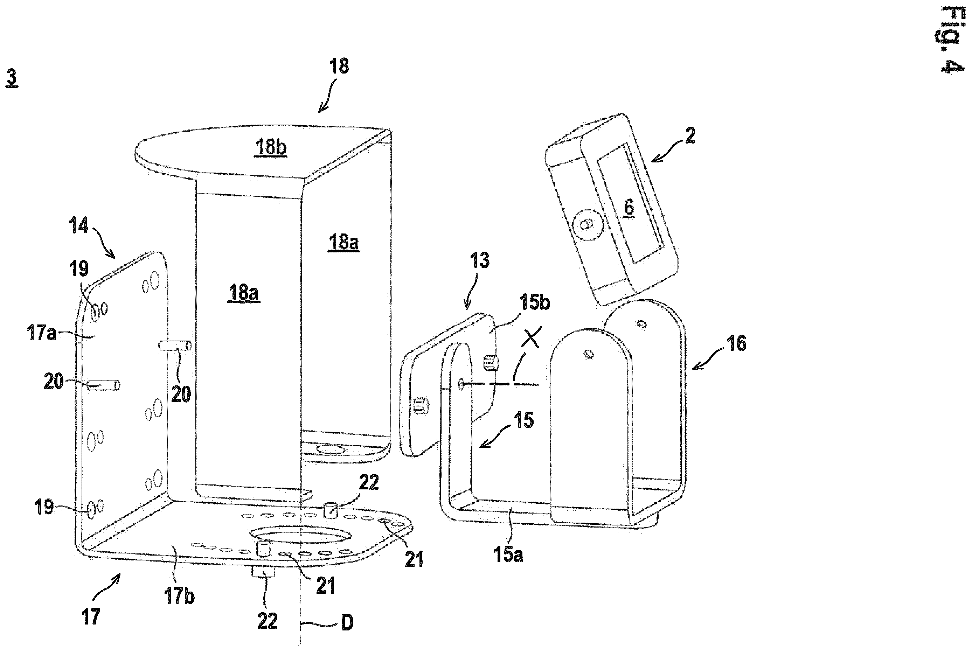

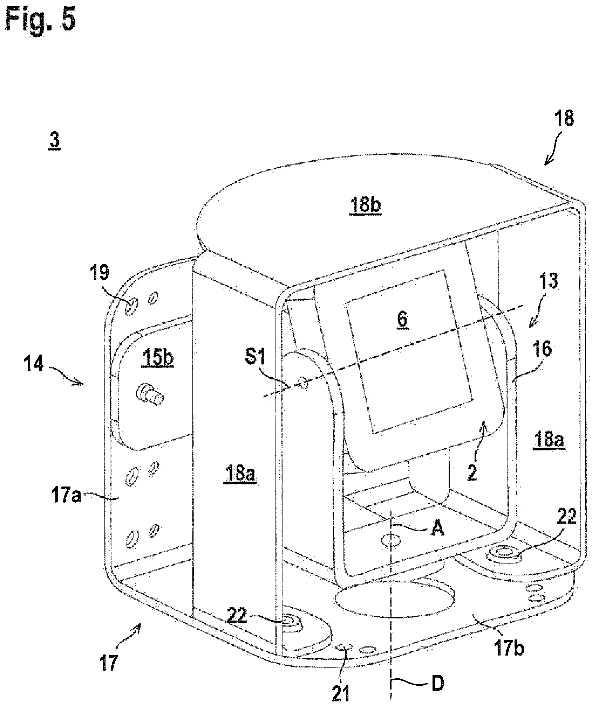

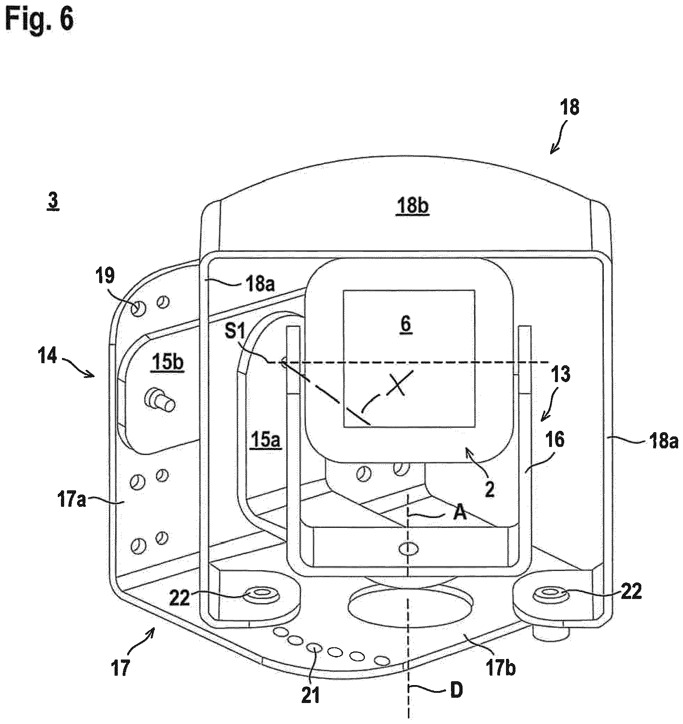

Figur 4 zeigt in einer Explosionsdarstellung die Komponenten eines ersten Ausführungsbeispiels des Montagesystems 3 der erfindungsgemäßen Sensoranordnung 1. Die Figuren 5 und 6 zeigen das zusammengebaute Montagesystem 3 in unterschiedlichen Justagepositionen.

Das Montagesystem 3 umfasst eine primäre Halterung 13, die eine Justagevorrichtung für den Sensor 2 ausbildet, und eine sekundäre Halterung 14, die einen mechanischen Schutz für den Sensor 2 gewährleistet.

Vorteilhaft besteht die sekundäre Halterung 14 aus einem stabileren Material als die primäre Halterung 13.

Insbesondere besteht die primäre Halterung 13 aus einem Kunststoff und die sekundäre Halterung 14 aus einem metallischen Werkstoff.

Die primäre Halterung 13 umfasst ein Verbindungselement 15 bestehend aus einem Winkel 15a und einer an einen ersten Arm des Winkels 15a befestigten Platte 15b. Auf dem zweiten Arm des Winkels 15a kann ein den Sensor 2 aufnehmenden Sensorhalter 16 so befestigt werden, dass der Sensorhalter 16 um eine Achse A drehbar gelagert ist. Die Achse A verläuft in Längsrichtung des Sensorhalters 16. Der Sensorhalter 16 ist bügelförmig ausgebildet.

Der erste Arm des Winkels 15a ist um eine Schwenkachse X schwenkbar an der Platte 15b gelagert.

Der Sensor 2 selbst ist am Sensorhalter 16 um eine Schwenkachse S1 schwenkbar gelagert, wobei die Schwenkachse S1 senkrecht zur Achse A verläuft. Die Figuren 5 und 6 zeigen den Sensor 2 in unterschiedlichen Drehpositionen am Sensorhalter 16.

Die sekundäre Halterung 14 umfasst ein Befestigungselement in Form eines Befestigungswinkels 17 und ein Schutzelement in Form eines Bügels 18.

Der das Befestigungselement bildende Befestigungswinkel 17 ist zur Befestigung an einer Unterlage, im vorliegenden Fall einer Wand der Anlage 100 ausgebildet.

Hierzu dient ein erstes Winkelsegment 17a des Befestigungswinkels 17, in dem Befestigungslöcher 19 vorgesehen sind zur Befestigung an einer Wand. Die Befestigungsmittel 20, die schrauben sein können, sind zur Befestigung des primären Halters 13 bestimmt.

Ein zweites Winkelsegment 17b des Befestigungswinkels 17 bildet eine Grundplatte, auf der der das Schutzelement bildende Bügel 18 positionsverstellbar befestigt werden kann.

Hierzu sind in der Grundplatte konzentrisch zu einem Drehpunkt angeordnete Lochreihen mit Löchern 21 vorgesehen. Die Löcher 21 jeder Lochreihe verlaufen jeweils entlang eines Kreisbogens. Die Löcher 21 sind im vorliegenden Fall kreisförmig ausgebildet. Alternativ können Langlöcher vorgesehen sein.

Damit wird eine Verstellbarkeit des Bügels 18 um eine Drehachse D erzielt. Die Drehachse D kann vorteilhaft mit der Achse A, um die der Sensorhalter 16 gedreht werden kann, zusammenfallen. Der Bügel 18 kann in diskreten Drehpositionen an der Grundplatte fixiert werden. Wie die Figuren 4 bis 6 zeigen, ist der Bügel 18 u-förmig ausgebildet, wobei zwei Schenkel 18a über ein Mittelteil 18b verbunden sind. Zur Fixierung einer Drehposition des Bügels 18 an der Grundplatte wird jeweils ein Fixierelement 22 durch ein Loch 21 einer Lochreihe der Grundplatte gesteckt und mit dem freien Ende eines Schenkels 18a verbunden. Die Fixierelemente 22 können von Schrauben gebildet sein.

Wie die Figuren 5 und 6 zeigen, kann in einem Justagevorgang der Sensorhalter 16 mit dem Sensor 2 in einer geeigneten Drehposition durch Drehen um die Achse A eingestellt und lagefixiert werden, wobei die Figuren 5 und 6 unterschiedliche Drehpositionen des Sensorhalters 16 zeigen. Damit ist der Sensor 2 in seiner Solllage justiert.

Daran angepasst wird das Schutzelement, d.h. der Bügel 18 der sekundären Halterung 14 in eine entsprechende Drehposition eingebracht, so dass sich der Bügel 18 über den Sensorhalter 16 mit dem Sensor 2 erstreckt und diesen mechanisch schützt. Da die Drehposition des Bügels 18 an die Drehposition des Sensorhalters 16 mit dem Sensor 2 angepasst ist, wird die Frontseite und damit das Sichtfeld 4 des Sensors 2 durch den Bügel 18 nicht versperrt.

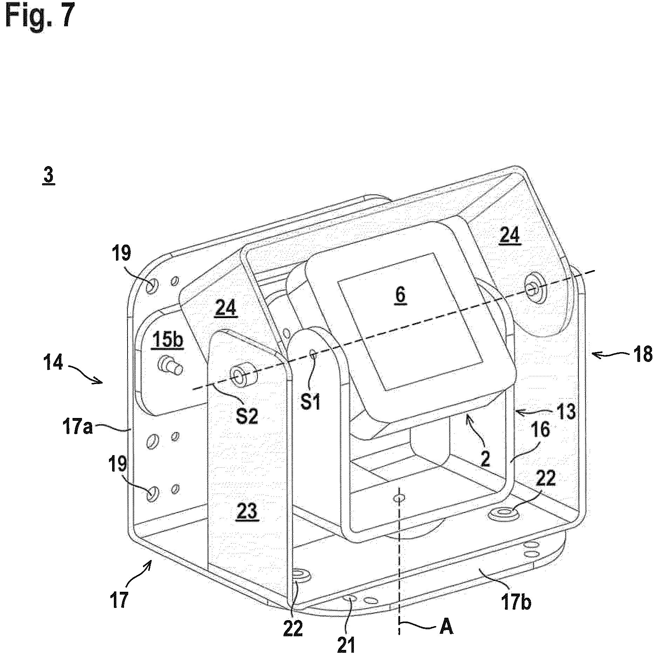

Figur 7 zeigt eine Weiterbildung der Ausführungsform gemäß Figur 6 derart, dass das Schutzelement aus einem u-förmigen Bügelunterteils 23 und einem u-förmigen Bügeloberteil 24 besteht, die gelenkig miteinander verbunden sind, so dass das Bügeloberteil 24 bezüglich einer Schwenkachse S2 bezüglich des Bügelunterteils 23 geschwenkt werden kann.

Die Schwenkachse S2 fällt mit der Schwenkachse S1 des Sensors 2 zusammen.

Das Bügelunterteil 23 kann entsprechend dem Bügel 18 der Ausführungsformen gemäß den Figuren 4 bis 6 mit den Fixierelementen 22 in diskreten Drehpositionen an der Grundplatte befestigt werden.

Dieses Schutzelement sorgt für einen weiter verbesserten mechanischen Schutz des Sensors 2, da die Neigung des Bügeloberteils 24 an die Neigung des Sensors 2 angepasst werden kann.

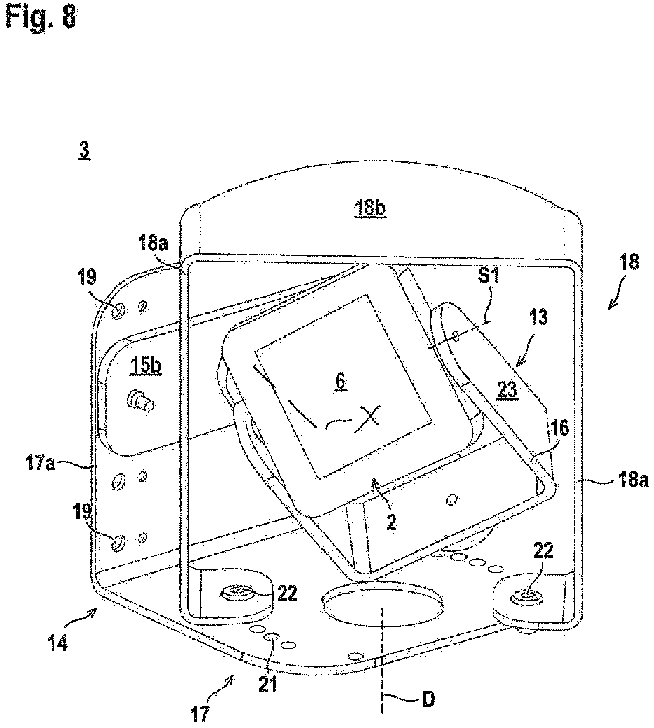

Figur 8 zeigt eine Variante der Ausführungsform gemäß den Figuren 4 bis 6, bei welcher der Sensorhalter 16 mit dem Senor 2 in zwei Raumrichtungen geneigt werden kann.

### Bezugszeichenliste

- (1): Sensoranordnung
- (2): Sensor
- (3): Montagesystem
- (4): Sichtfeld
- (5): Gehäuse
- (6): Frontscheibe
- (7): Strahlung
- (8): Sendereinheit
- (9): Empfängereinheit
- (10): Auswerteeinheit
- (11): Objekt
- (12): Ablenkeinheit
- (13): primäre Halterung
- (14): sekundäre Halterung
- (15): Verbindungselement
- (15a): Winkel
- (15b): Platte
- (16): Sensorhalter
- (17): Befestigungswinkel
- (17a): Winkelsegment
- (17b): Winkelsegment
- (18): Bügel
- (18a): Schenkel
- (18b): Mittelteil
- (19): Befestigungsfläche
- (20): Befestigungsmittel
- (21): Loch
- (22): Fixierelement
- (23): Bügelunterteil
- (24): Bügeloberteil
- (100): Anlage

- (A): Achse
- (D): Drehachse
- (S1): Schwenkachse
- (S2): Schwenkachse
- (X): Schwenkachse

## Patentansprüche

1. Sensoranordnung (1) mit einem ein Sichtfeld (4) aufweisenden Sensor (2) und mit einer primären Halterung (13), an welcher der Sensor (2) befestigbar ist, wobei die primäre Halterung (13) eine Justagevorrichtung ausbildet, mittels derer die Orientierung des Sichtfelds (4) des Sensors (2) einstellbar ist, wobei eine sekundäre Halterung (14) vorhanden ist, an welcher die primäre Halterung (13) befestigbar ist, wobei die sekundäre Halterung (14) einen mechanischen Schutz für den Sensor (2) ausbildet, und wobei die sekundäre Halterung (14) an die Orientierung des Sichtfelds (4) des Sensors (2) anpassbar ist, **dadurch gekennzeichnet, dass** die sekundäre Halterung (14) mehrteilig ausgebildet ist, wobei mindestens ein Teil der sekundären Halterung (14) an die Orientierung des Sichtfelds (4) des Sensors (2) anpassbar ist, wobei die sekundäre Halterung (14) ein Befestigungselement aufweist, das zur Befestigung an einer Unterlage ausgebildet ist, und die sekundäre Halterung (14) ein an dem Befestigungselement positionsverstellbares Schutzelement aufweist, wobei das Befestigungselement ein Befestigungswinkel (17) ist, und dass das Schutzelement in Form eines Bügels (18) ausgebildet ist, wobei das Schutzelement bezüglich einer Drehachse (D) drehbar gelagert und in diskreten Drehpositionen am Befestigungselement arretierbar ist, und dass die primäre Halterung (13) ein mit der sekundären Halterung (14) verbundenes Verbindungselement (15) und einen den Sensor (2) aufnehmenden um eine Achse (A) drehbare Sensorhalter (16) aufweist, wobei die Lage des Sensorhalters (16) relativ zum Verbindungselement (15) einstellbar ist, wobei das Verbindungselement (15) aus einem Winkel (15a) und einer Platte (15b), die an der sekundären Halterung (14) befestigt ist besteht, wobei der Winkel (15a) mit einem ersten Arm um eine Schwenkachse (X) schwenkbar an_der Platte (15b) gelagert ist, und wobei auf dem zweiten Arm des Winkels (15a) der Sensorhalter (16) um die Achse (A) drehbar gelagert ist und dass Sensorlagen des Sensors (2) an der primären Halterung (13) innerhalb vorgegebener Einstellbereiche veränderbar sind, und dass Einstellbereiche des Schutzelements an die Einstellbereiche des Sensors (2) angepasst sind.

2. Sensoranordnung (1) nach Anspruch 1, **dadurch gekennzeichnet, dass** in einem Segment des Befestigungselements zwei konzentrisch zu einem Drehpunkt angeordnete Lochreihen oder Langlöcher vorhanden sind, wobei zur Arretierung einer Drehposition des Schutzelements in jeweils mindestens ein Loch (21) einer Lochreihe oder Langlöcher ein mit der Unterseite des Schutzelements verbindbares Fixierelement (22) einführbar ist.

3. Sensoranordnung (1) nach einem der Ansprüche 1 oder 2, **dadurch gekennzeichnet, dass** das Schutzelement mehrteilig ausgebildet ist, wobei ein oberes Teil des Schutzelements bezüglich einer Schwenkachse (S2) gegenüber einem unteren Teil des Schutzelements, das mit dem Befestigungselement verbunden ist, schwenkbar ist.

4. Sensoranordnung (1) nach einem der Ansprüche 1 bis 3, **dadurch gekennzeichnet, dass** der Sensorhalter (16) in zwei Raumrichtungen neigungsverstellbar ist.

5. Sensoranordnung (1) nach Anspruch 4, **dadurch gekennzeichnet, dass** die Achse (A) parallel zur Drehachse (D) des Schutz-elements verläuft, und/oder dass der Sensor (2) an dem Sensorhalter (16) um eine Schwenkachse (S1) schwenkbar gelagert ist, wobei die Schwenkachse (S1) senkrecht zur Längsachse des Sensorhalters (16) verläuft.

6. Sensoranordnung (1) nach einem der Ansprüche 1 bis 5, **dadurch gekennzeichnet, dass** die sekundäre Halterung (14) zur Gewährleistung eines Schutzes gegen mechanische Belastungen aus einem stabileren Material als die primäre Halterung (13) besteht.

7. Sensoranordnung (1) nach einem der Ansprüche 1 bis 6, **dadurch gekennzeichnet, dass** der Sensor (2) ein Radarsensor oder ein optischer Sensor (2) ist.

8. Sensoranordnung (1) nach einem der Ansprüche 1 bis 7, **dadurch gekennzeichnet, dass** der Sensor (2) ein Sicherheitssensor ist, welcher einen fehlersicheren Aufbau aufweist.

## Claims

1. Sensor assembly (1) comprising a sensor (2) having a field of view (4) and a primary mounting (13) to which the sensor (2) can be attached, wherein the primary mounting (13) forms an adjustment device by means of which the orientation of the field of view (4) of the sensor (2) can be adjusted, wherein a secondary mounting (14) is provided to which the primary mounting (13) can be secured, wherein the secondary mounting (14) forms a mechanical protection for the sensor (2), and wherein the secondary mounting (14) can be adapted to the orientation of the field of view (4) of the sensor (2), **characterised in that** the secondary mounting (14) is of a multi-part design, wherein at least one part of the secondary mounting (14) can be adapted to the orientation of the field of view (4) of the sensor (2), wherein the secondary mounting (14) comprises a fastening element designed for attachment to a substrate, and the secondary mounting (14) comprises a protective element which is positionally adjustable on the fastening element, wherein the fastening element is a mounting bracket (17), and that the protective element is in the form of a bracket (18), wherein the protective element is mounted so as to be rotatable about an axis of rotation (D) and can be locked into discrete rotational positions on the fastening element, and that the primary bracket (13) comprises a connecting element (15) connected to the secondary bracket (14) and a sensor holder (16) rotatable about an axis (A) and designed to accommodate the sensor (2), wherein the position of the sensor holder (16) relative to the connecting element (15) is adjustable, wherein the connecting element (15) comprises a bracket (15a) and a plate (15b) fixed to the secondary mounting (14), wherein the bracket (15a) is mounted on the plate (15b) such that its first arm can pivot about a pivot axis (X), and wherein the sensor holder (16) is mounted on the second arm of the bracket (15a) so as to be rotatable about the axis (A), and **in that** the positions of the sensor (2) on the primary mounting (13) can be varied within predetermined adjustment ranges, and **in that** the adjustment ranges of the protective element are adapted to the adjustment ranges of the sensor (2).

2. Sensor assembly (1) according to claim 1, **characterised in that**, in a segment of the fastening element, there are two rows of holes or slotted holes arranged concentrically about a pivot point, wherein, to lock the protective element in a rotational position, a fixing element (22) capable of being connected to the underside of the protective element can be inserted into at least one hole (21) in each row of holes or slotted holes.

3. Sensor assembly (1) according to one of claims 1 or 2, **characterised in that** the protective element is of a multi-part design, wherein an upper part of the protective element is pivotable about a pivot axis (S2) relative to a lower part of the protective element, which is connected to the fastening element.

4. Sensor assembly (1) according to any one of claims 1 to 3, **characterised in that** the sensor holder (16) is adjustable in inclination in two spatial directions.

5. Sensor assembly (1) according to claim 4, **characterised in that** the axis (A) runs parallel to the axis of rotation (D) of the protective element, and/or that the sensor (2) is mounted on the sensor holder (16) so as to be pivotable about a pivot axis (S1), wherein the pivot axis (S1) extends perpendicular to the longitudinal axis of the sensor holder (16).

6. Sensor assembly (1) according to any one of claims 1 to 5, **characterised in that** the secondary mounting (14), to ensure protection against mechanical stresses, is made of a more robust material than the primary mounting (13).

7. Sensor assembly (1) according to any one of claims 1 to 6, **characterised in that** the sensor (2) is a radar sensor or an optical sensor (2).

8. Sensor assembly (1) according to any one of claims 1 to 7, **characterised in that** the sensor (2) is a safety sensor having a fail-safe design.

## Revendications

1. Agencement de capteurs (1) comprenant un capteur (2) présentant un champ de vision (4) et un support primaire (13) sur lequel le capteur (2) peut être fixé, le support primaire (13) formant un dispositif de réglage permettant d'ajuster l'orientation du champ de vision (4) du capteur (2), un support secondaire (14) étant prévu, sur lequel le support primaire (13) peut être fixé, le support secondaire (14) formant une protection mécanique pour le capteur (2), et le support secondaire (14) pouvant être adapté à l'orientation du champ de vision (4) du capteur (2), **caractérisé en ce que** le support secondaire (14) est constitué de plusieurs parties, au moins une partie du support secondaire (14) pouvant être adaptée à l'orientation du champ de vision (4) du capteur (2), le support secondaire (14) comportant un élément de fixation conçu pour être fixé à un support, et le support secondaire (14) comporte un élément de protection dont la position est réglable sur l'élément de fixation, l'élément de fixation étant une équerre de fixation (17), et que l'élément de protection se présente sous la forme d'un étrier (18), l'élément de protection étant monté de manière à pouvoir tourner autour d'un axe de rotation (D) et pouvant être bloqué dans des positions de rotation discrètes sur l'élément de fixation, et que le support primaire (13) comporte un élément de liaison (15) relié au support secondaire (14) et d'un support de capteur (16) pouvant tourner autour d'un axe (A) et recevant le capteur (2), la position du support de capteur (16) par rapport à l'élément de liaison (15) étant réglable, l'élément de liaison (15) étant constitué d'une équerre (15a) et d'une plaque (15b) fixée au support secondaire (14), l'équerre (15a) étant montée de manière pivotante sur la plaque (15b) par un premier bras autour d'un axe de pivotement (X), et le support de capteur (16) étant monté de manière à pouvoir tourner autour de l'axe (A) sur le second bras de l'équerre (15a), et **en ce que** les positions du capteur (2) sur le support primaire (13) peuvent être modifiées dans des plages de réglage prédéfinies, et **en ce que** les plages de réglage de l'élément de protection sont adaptées aux plages de réglage du capteur (2).

2. Agencement de capteurs (1) selon la revendication 1, **caractérisé en ce que**, dans un segment de l'élément de fixation, se trouvent deux rangées de trous ou de trous oblongs disposées de manière concentrique par rapport à un point de pivotement, un élément de fixation (22) pouvant être relié à la face inférieure de l'élément de protection pouvant être inséré dans au moins un trou (21) d'une rangée de trous ou de trous oblongs pour bloquer une position de rotation de l'élément de protection.

3. Agencement de capteurs (1) selon l'une des revendications 1 ou 2, **caractérisé en ce que** l'élément de protection est constitué de plusieurs parties, une partie supérieure de l'élément de protection pouvant pivoter par rapport à un axe de pivotement (S2) par rapport à une partie inférieure de l'élément de protection qui est reliée à l'élément de fixation.

4. Agencement de capteurs (1) selon l'une des revendications 1 à 3, **caractérisé en ce que** le support de capteur (16) est réglable en inclinaison dans deux directions spatiales.

5. Agencement de capteurs (1) selon la revendication 4, **caractérisé en ce que** l'axe (A) s'étend parallèlement à l'axe de rotation (D) de l'élément de protection, et/ou **en ce que** le capteur (2) est monté de manière pivotante sur le support de capteur (16) autour d'un axe de pivotement (S1), l'axe de pivotement (S1) étant perpendiculaire à l'axe longitudinal du support de capteur (16).

6. Agencement de capteurs (1) selon l'une des revendications 1 à 5, **caractérisé en ce que** le support secondaire (14), destiné à assurer une protection contre les contraintes mécaniques, est constitué d'un matériau plus résistant que le support primaire (13).

7. Agencement de capteurs (1) selon l'une des revendications 1 à 6, **caractérisé en ce que** le capteur (2) est un capteur radar ou un capteur optique (2).

8. Agencement de capteurs (1) selon l'une des revendications 1 à 7, **caractérisé en ce que** le capteur (2) est un capteur de sécurité présentant une conception à sécurité intégrée.
